# EUROPÄISCHE PATENTANMELDUNG

(11) **EP 4 807 977 A1**
(43) Veröffentlichungstag der Anmeldung: **16.09.2026**
(21) Anmeldenummer: 25163917.5
(22) Anmeldetag: 14.03.2025
(51) Int. Cl.: H02P 3/04, H02P 3/22, H02P 27/06

(54) **AUFBAU UND BETRIEBSVERFAHREN EINES MODULAREN BREMSSTELLERS**

(71) Anmelder: Innomotics GmbH, 90441 Nürnberg (DE)
(72) Erfinder: HOFMANN, Viktor, 95448 Bayreuth (DE)
(74) Vertreter: Michalski Hüttermann & Partner mbB

(57) **Zusammenfassung**

Die Erfindung betrifft einen modularen Bremssteller (1) mit zwei Anschlüssen (31), wobei der modulare Bremssteller (1) vier Stellerarme (11,12,13,14) aufweist, wobei ein erster Stellerarm (11) und ein zweiter Stellerarm (12) der vier Stellerarme (11,12,13,14) elektrisch in Reihe zwischen den zwei Anschlüssen (31) angeordnet sind, wobei ein Verbindungspunkt zwischen dem ersten Stellerarm (11) und dem zweiten Stellerarm (12) einen ersten Knoten (21) bildet, wobei ein dritter Stellerarm (13) und ein vierter Stellerarm (14) der vier Stellerarme (11,12,13,14) in Reihe zwischen den zwei Anschlüssen (31) angeordnet sind, wobei ein weiterer Verbindungspunkt zwischen dem dritten Stellerarm (13) und dem vierten Stellerarm (14) einen zweiten Knoten (22) bildet, wobei zwischen dem ersten Knoten (21) und dem zweiten Knoten (22) ein Bremswiderstand (3) angeordnet ist, wobei die Stellerarme (11,12,13,14) jeweils mindestens ein Submodul aufweisen. Ferner betrifft die Erfindung ein Antriebssystem (4) mit einem Stromrichter (5) und einem derartigen modularen Bremssteller (1), wobei die Anschlüsse (31) des modularen Bremsstellers (1) mit einem Zwischenkreis des Stromrichters (5) elektrisch verbunden sind. Die Erfindung betrifft weiter ein Betriebsverfahren für einen derartigen modularen Bremssteller (1) oder für ein derartiges Antriebssystem, wobei die Stellerarme (11,12,13,14) jeweils eine Gleichspannung und darüber hinaus zumindest ein Teil der Stellerarme eine Wechselspannung erzeugen.

## Beschreibung

Die Erfindung betrifft einen modularen Bremssteller mit Submodulen sowie ein Antriebssystem mit einem derartigen Bremssteller. Ferner betrifft die Erfindung ein Betriebsverfahren für einen modularen Bremssteller oder ein Antriebssystem.

In vielen Anwendungen der Antriebstechnik und der Energieübertragung, insbesondere im Bereich der Mittelspannung und der Hochspannung, besteht häufig die Notwendigkeit eines kurzfristigen Energieabbaus. Dabei kann sich beispielsweise bei Fehlerfällen oder in undefinierten Systemzuständen die Situation ergeben, dass eine Übertragungsstrecke an ihre Kapazitätsgrenze gerät. Um dann Systemausfällen vorzubeugen bzw. allgemein ein hohe Versorgungssicherheit des Antriebs oder des Energieversorgungssystems sicherzustellen, können hierfür sogenannte Bremssteller, auch als Bremschopper bezeichnet, eingesetzt werden, die einen definierten Abbau überschüssiger elektrischer Energie ermöglichen, indem sie diese in Wärme umwandeln. Weiterhin kann ein Bremssteller in einem Antriebssystem dazu genutzt werden, durch einen Bremsvorgang gewonnene elektrische Energie verschließfrei in Wärme umzuwandeln, falls das Energieversorgungsnetz nicht aufnahmefähig ist.

Unter dem Begriff in Reihe angeordnet wird im Folgenden verstanden, dass sich die Spannungen zweier in Reihe angeordneter Komponenten zu einer Spannung addieren. Diese Komponenten müssen nicht notwendigerweise vom gleichen Strom durchflossen sein. Unter einer Reihenschaltung wird im Folgenden verstanden, dass die Komponenten der Reihenschaltung vom gleichen Strom durchflossen werden, also keine Verzweigung zwischen den Komponenten angeordnet ist.

Der Erfindung liegt die Aufgabe zugrunde, einen modularen Bremssteller zu verbessern.

Diese Aufgabe wird durch einen modularen Bremssteller mit zwei Anschlüssen gelöst, wobei der modulare Bremssteller vier Stellerarme aufweist, wobei ein erster Stellerarm und ein zweiter Stellerarm der vier Stellerarme elektrisch in Reihe zwischen den zwei Anschlüssen angeordnet sind, wobei ein Verbindungspunkt zwischen dem ersten Stellerarm und dem zweiten Stellerarm einen ersten Knoten bildet, wobei ein dritter Stellerarm und ein vierter Stellerarm der vier Stellerarme in Reihe zwischen den zwei Anschlüssen angeordnet sind, wobei ein weiterer Verbindungspunkt zwischen dem dritten Stellerarm und dem vierten Stellerarm einen zweiten Knoten bildet, wobei zwischen dem ersten Knoten und dem zweiten Knoten ein Bremswiderstand angeordnet ist, wobei die Stellerarme jeweils mindestens ein Submodul mit einem Submodulkondensator aufweisen, wobei das Submodul derart ausgebildet ist, mittels mindestens zweier Halbleiterschalter mindestens zwei unterschiedliche Spannungszustände zwischen den Submodulanschlüssen des Submoduls erzeugen zu können, wobei einer der mindestens zwei Spannungszuständen einer am Submodulkondensator anliegenden Spannung entspricht. Diese Aufgabe wird weiter durch ein Antriebssystem mit einem Stromrichter und einem derartigen modularen Bremssteller gelöst, wobei die Anschlüsse des modularen Bremsstellers mit einem Zwischenkreis des Stromrichters elektrisch verbunden sind. Ferner wird diese Aufgabe durch ein Betriebsverfahren für einen derartigen modularen Bremssteller oder für ein derartiges Antriebssystem gelöst, wobei die Stellerarme jeweils eine Gleichspannung erzeugen, die derart bemessen ist, dass an den Anschlüssen des modularen Bremsstellers eine vorgebbare elektrische Leistung aufgenommen wird, wobei zumindest ein Teil der Stellerarme ferner jeweils eine Wechselspannung erzeugen, die derart bemessen ist, dass eine vorgebbare thermische Leistung im Bremswiderstand in Wärme umgesetzt wird, wobei die vorgebbare thermische Leistung der vorgebbaren elektrischen Leistung entspricht.

Vorteilhafte Ausgestaltungen der Erfindung sind in den abhängigen Ansprüchen angegeben.

Der Erfindung liegt unter anderem die Erkenntnis zugrunde, dass sich ein modularer Bremssteller dadurch verbessern lässt, wenn dieser vier Stellerarme umfasst. Als besonders vorteilhaft hat es sich ergeben, wenn der modulare Bremssteller genau vier Stellerarme umfasst, da in dieser Anordnung die Komponenten derart ausgelegt werden können, dass alle Submodule die gleiche Belastung erfahren und damit gleich ausgenutzt sind. Dies führt nicht nur zu geringen Herstellungskosten sondern sichert auch eine hohe Lebensdauer eines derartigen modularen Bremsstellers. Dabei bilden ein erster Stellerarm und ein zweiter Stellerarm, die in Reihe angeordnet sind eine erste Phase des modularen Bremsstellers. Parallel zu dieser ersten Phase ist eine zweite Phase umfassend einen dritten und einen vierten Stellerarm angeordnet. Die Verbindungspunkte zwischen erstem und zweitem Stellerarm sowie zwischen drittem und viertem Stellerarm werden auch als Knoten bezeichnet. Zwischen diesen Knoten ist der Bremswiderstand elektrisch angeordnet.

Die jeweiligen Stellerarme weisen jeweils mindestens ein Submodul auf. Um die Spannungsfestigkeit zu erhöhen und/oder den zeitlichen Verlauf des Stromes und der Spannung zu optimieren können die Stellerarme auch jeweils eine Vielzahl von Submodulen aufweisen. Dabei hat es sich als vorteilhaft erwiesen, dass die Stellerarme jeweils die gleiche Anzahl an Submodulen aufweisen. Dies vereinfacht die Regelungsstruktur und die Ansteuerung der einzelnen Submodule. Die Stellerarme weisen in ihrem elektrischen Verhalten eine Induktivität auf. Diese kann dazu genutzt werden, einen Gleichstrom in die entsprechende Phase bzw. in den entsprechenden Stellerarm einzuprägen. Um die Steuerbarkeit zu verbessern können die Phasen auch eine zusätzliche Induktivität, beispielsweise in Form einer Spule oder Drossel, aufweisen. Über den durch die Stellerarme modulierten Spannungen an den Induktivitäten, sowohl den parasitären als auch, falls vorhanden, den zusätzlichen Induktivitäten können Ströme, insbesondere Kreisströme gezielt in den modularen Bremssteller eingeprägt werden.

Als Submodule können beliebige Submodule zum Einsatz kommen. Wichtig dabei ist, dass diese Submodule an ihren Submodulanschlüssen abhängig vom Schaltzustand der Halbleiterschalter unterschiedliche Spannungen erzeugen können. Da es sich um Spannungen abhängig vom Zustand des Submoduls handelt, werden diese Spannungen auch als Spannungszustände bezeichnet.

Dadurch, dass der Bremswiderstand nicht wie sonst üblich in einer Phase, sondern in der Verbindung zwischen zwei Phasen angeordnet ist, wird er im Leerlauf, wenn der Bremswiderstand nicht aktiv ist, nicht vom Strom durchflossen. Das senkt die Verluste und damit die Betriebskosten des vorgeschlagenen Bremsstellers. Die zur Deckung der Verluste notwendige Strom durch die Submodule fließt beim vorgeschlagenen Aufbau und gleicher Gleichspannung vom ersten und dritten, sowie zweiten und vierten Stellerarm nicht durch den Bremswiderstand.

An den Zwischenkreis des Antriebssystems, wobei der Zwischenkreis vom Stromrichter bereitgestellt wird, können eine beliebige Anzahl von Gleich- und Wechselrichtern angeschlossen sein. Auch ist der Anschluss mehrerer Bremssteller, insbesondere mehrerer modularer Bremssteller möglich. Das Antriebssystem kann darüber hinaus auch elektrische Maschinen umfassen. Das Antriebssystem mit einer oder mehreren elektrischen Maschinen kann in besonders vorteilhafter Weise mit dem modularen Bremssteller kombiniert werden. Sollte die Energieversorgung des Antriebssystems nicht aufnahmefähig sein, so kann die elektrische Energie, die durch einen Bremsvorgang der elektrischen Maschine gewonnen wird, verschleißfrei durch den modularen Bremssteller in Wärme umgewandelt werden.

Die Hauptaufgabe des Bremsstellers liegt in einer definierten Leistungsumsetzung P_{BR} im Bremswiderstand. Vereinfacht kann dabei eine Stellerarm als steuerbare Spannungsquelle betrachtet werden, der eine vorgegebene Spannung moduliert und damit einen definierten Strom in den modularen Bremssteller einprägt.

Im Leerlauf, auch als Stand-By des Bremsstellers bezeichnet, ist der Bremssteller betriebsbereit, wandelt jedoch keine elektrische Energie in Wärme um. In diesem Betrieb wird von den Stellerarmen nur eine Gleichspannung erzeugt. mit anderen Worten ist in diesem Betriebsmodus die Spannung der Stellerarme jeweils wechselspannungsanteilsfrei. Die in den Phasen zu modulierende Spannung durch die jeweiligen beiden Stellerarmen entspricht der Zwischenkreisspannung. Zur Deckung der elektrischen Verluste in den Submodulen fließt ein zu vernachlässigender Strom, so dass sich die durch die Stellerarmen in einer Phase erzeugten Spannung leicht um den Wert der Zwischenkreisspannung unterscheiden kann.

Die dabei zu modulierende Gleichspannung kann dabei beliebig auf die Stellerarme innerhalb der Phase aufgeteilt werden. Dies schließt den Fall einer Gleichspannung von 0V ein. Dabei ist zu beachten, dass die Gleichspannung, im Leerlauf auch die gesamte Spannung, über dem Bremswiderstand zu null wird, damit keine Umwandlung von elektrischer Energie in Wärme durch den Bremswiderstand erfolgt. Daher sind die Gleichspannungen des ersten und dritten Stellerarms, sowie die Spannungen des zweiten und vierten Stellerarms im Leerlauf vorzugsweise gleich zu wählen, um auf andere Maßnahmen zur Vermeidung eines Stromes durch den Bremswiderstand verzichten zu können.

Im aktiven Betrieb des Bremsstellers, also bei einem Betriebszustand, in dem elektrische Energie im Bremswiderstand in Wärme umgewandelt wird, erzeugen die Stellerarme jeweils eine Gleichspannung, die derart bemessen ist, dass damit die Aufnahme von elektrischer Energie über die Anschlüsse bzw. aus einem daran angeschlossenen Zwischenkreis gesteuert oder geregelt wird. Dazu wird über der Induktivität der entsprechenden Phase eine Spannung erzeugt, die einen Stromfluss durch die Stellerarme der betreffenden Phase erzeugt. Die Aufteilung der Gleichsannung auf die Stellerarme einer Phase kann dabei auch beim aktiven Betrieb beliebig erfolgen. Dies schließt auch den Fall einer Gleichspannung mit einem Wert von 0V ein. Zusätzlich zu der Gleichspannung erzeugen mindestens zwei der Stellerarme einer Phase eine Wechselspannung, die gegenphasig ist. Gegenphasig bedeutet, dass diese sich um das Vorzeichen unterscheiden und sich in der Summe der beiden Spannungen gegenseitig kompensieren. Durch die Gegenphasigkeit wird ein Wechselstrom an den Anschlüssen und damit Störungen im Zwischenkreis zuverlässig vermieden und gleichzeitig ein Wechselstrom durch den Bremswiderstand erzeugt, der einen vorgebbaren Wert an thermischer Leistung im Widerstand in Wärme umwandelt.

Die Erzeugung des Stromes durch den Bremswiderstand erfolgt durch die jeweiligen Wechselspannungen. In einer ersten Masche, die durch den ersten Stellerarm, den dritten Stellerarm und den Bremswiderstand gebildet wird, wird durch die Spannung einen oder beiden der in dieser ersten Masche befindlichen Stellerarme eine Wechselspannung erzeugt, die über den Bremswiderstand abfällt und einen Wechselstrom durch den Bremswiderstand verursacht. Das gleiche gilt für eine zweite Masche, die durch den zweiten Stellerarm, den vierten Stellerarm und den Bremswiderstand gebildet wird. Auch hier erzeugt die Wechselspannung über den Bremswiderstand, die sich aus der Wechselspannung eines Stellerarms oder beider Stellerarme dieser zweiten Masche ergibt einen weiteren Stromanteil in dieser Masche durch den Bremssteller. Dabei teilt sich der der Strom durch den Bremswiderstand auf die beiden Maschen auf. Die Aufteilung kann über zusätzlich Spannungsanteile über den vorhandenen Induktivitäten gesteuert oder geregelt werden. Vorteilhafterweise erfolgt eine derartige Steuerung oder Regelung derart, dass sich in beiden Maschen der gleiche Strom ergibt. Dadurch werden alle Submodule des Bremsstellers gleichmäßig belastet und können baugleich bzw. identisch ausgeführt werden.

Zumindest ein Teil der Stellerarme erzeugt eine Gleichspannung und eine Wechselspannung. Damit ist gemeint, dass diese Stellerarme eine Spannung erzeugen, die einen Gleichspannungsanteil in Höhe der Gleichspannung und einen Wechselspannungsanteil in Höhe der Wechselspannung aufweisen.

Um den modularen Bremssteller stabil betreiben zu können, muss die an den Anschlüssen aufgenommene elektrischen Leistung der in Wärme umzuwandelnden thermischen Leistung entsprechen. Mathematisch wird das durch die Formel für die Leistung des Bremsstellers ${P}_{BS} = {U}_{D} ⋅ {I}_{D} = R ⋅ {i}_{R , eff}^{2}$ ausgedrückt. Dabei ist P_{BS} ist Leistung des Bremsstellers, U_{D} die Zwischenkreisspannung an den Anschlüssen, I_{D} der Gleichstrom zwischen den Anschlüssen, R der Widerstandswert des Bremswiderstandes und i_{R,eff} der Effektivwert des Stromes durch den Bremswiderstand. Somit ist für einen stabilen Betrieb des Bremsstellers der Vorgabewert der elektrischen Leistung mit dem Vorgabewert für die thermischen Leistung. Das kann beispielsweise dadurch erreicht werden, dass die in den Submodulkondensatoren gespeicherte Energie betrachtet wird. Nimmt diese Energie im zeitlichen Mittel zu oder ab, so ist das Gleichgewicht nicht erreicht. Somit kann man mittels einer Regelung auf Basis der Spannungen der Submodulkondensatoren auf einfache Weise sicherstellen das die Vorgabewerte für elektrische Leistung und thermische Leistung gleich sind.

Aus der genannten Formel lässt sich beispielsweise der Wert der Amplitude der Wechselspannung bei einem sinusförmigen Verlauf bestimmen, der zur Vorsteuerung der Energieregelung verwendet werden kann.

Die modulierten Wechselspannungen sind prinzipiell frei wählbar und können einen beliebigen periodischen Zeitverlauf annehmen.

Ein besonderer Vorteil der vorgeschlagenen Anordnungen und des entsprechenden Betriebsverfahren ist der verlustarme Betrieb des modularen Bremsstellers während des Leerlaufs. Da der modulare Bremssteller einen großen Teil seiner Betriebszeit im Leerlauf, d.h. ohne Umwandlung von elektrischer Energie in Wärme, betriebe wird, ist ein verlustarmer Betrieb für niedrige Betriebskosten von großer Bedeutung. Da der Strom zum Ausgleich von Verlusten innerhalb der Submodule nicht über den Bremswiderstand fließt, ist der Leerlaufbetrieb besonders verlustarm. Mit anderen Worten fließt aufgrund der internen Verluste des modularen Bremsstellers und der kontinuierlichen Entladung der Submodulkondensatoren stets ein geringer Strom, auch als Nachladestrom bezeichnet, durch die Stellerarme und deren Submodule. Aufgrund des Aufbaus des erfindungsgemäßen modularen Bremsstellers fließt dieser Nachladestrom nicht über den Bremswiderstand. Dies reduziert deutlich die elektrischen Verluste des modularen Bremsstellers im Leerlaufbetrieb.

Während des aktiven Betriebs des modularen Bremsstellers, wenn also elektrische Energie durch den Bremswiderstand in Wärme umgewandelt wird, ist ein hoher Leistungsumsatz gefordert. In diesem Betrieb sind die Stellerarme des erfindungsgemäßen Aufbaus nur mit der Hälfte des Stroms belastet, der durch den Bremswiderstand fließt. Gleichzeitig verteilt sich auch der zwischen den Anschlüssen fließende Gleichstrom gleichmäßig auf die beiden Phasen des modularen Bremsstellers. Dies erlaubt einen kostengünstigen Aufbau der Submodule sowie eine hohe Leistungsfähigkeit des erfindungsgemäßen modularen Bremsstellers.

Besonders vorteilhaft ist das Antriebssystem, wenn der Stromrichter des Antriebssystems als modularer Multilevel-Stromrichter ausgebildet ist. In diesem Fall lassen sich sowohl der Stromrichter als auch der modulare Bremssteller in seiner Leistungsfähigkeit an die Anforderungen an das Antriebssystem anpassen. Insbesondere kann eine besonders einfache Anpassung an das geforderte Spannungslevel geschehen. Damit ist diese Ausgestaltung besonders für Anwendungen im Bereich der Mittelspannung und/oder Hochspannung geeignet.

Bei einer vorteilhaften Ausgestaltung der Erfindung weisen die Stellerarme jeweils eine Vielzahl von Submodulen auf, wobei die Submodule des jeweiligen Stellerarmes elektrisch in einer Reihenschaltung angeordnet sind. Durch die Vielzahl der in einer Reihenschaltung angeordneten Submodule lässt sich die Leistungsfähigkeit nahezu beliebig erhöhen. Gleichzeitig ist es möglich, eine gewünschte Stromform, d.h. einen gewünschten Zeitlichen Verlauf des Stromes sehr genau nachzubilden.

Bei einer weiteren vorteilhaften Ausgestaltung der Erfindung ist die Gleichspannung des ersten Stellerarms identisch mit der Gleichspannung des dritten Stellerarms, wobei die Gleichspannung des zweiten Stellerarms identisch ist mit der Gleichspannung des vierten Stellerarms, wobei die Wechselspannung des ersten Stellerarms gegenphasig zur Wechselspannung des zweiten Stellerarms ist, wobei die Wechselspannung des dritten Stellerarms gegenphasig zur Wechselspannung des vierten Stellerarms ist. Durch diesen Betrieb wird eine besonders hohe Umwandlung von elektrischer Energie durch den Bremswiderstand in Wärme erzielt, da die Spannung über den Bremswiderstand bei diesem Betrieb groß ist. Darüber hinaus kann der modulare Bremssteller auf besonders einfache Art stabil betrieben werden, da kein Gleichstrom über den Bremswiderstand fließt und die Energiebilanz zwischen an den Anschlüssen aufgenommener elektrischen Leistung und in Wärme umzuwandelnde thermische Leistung unzulässig beeinflusst.

Durch diesen vorgeschlagenen Betrieb stellen sich vollständig symmetrische Strom- und Spannungsbedingungen ein. Durch diese werden die Submodule nicht nur gleichmäßig belastet, sondern diese Belastung stellt auch die kleinstmögliche Belastung der einzelnen Submodul dar. Dadurch haben alle Submodule eine vergleichbare und besonders hohe Lebensdauer. Unter anderem hat es sich für diesen Betrieb als vorteilhaft erwiesen, wenn die Anzahl der Submodule in allen Stellerarmen gleich gewählt wird. Mit dieser gleichen Anzahl können die zuvor genannten gleichen und gegenphasigen Spannungsanteile mit wenigen Submodulen zuverlässig realisiert werden. Mit anderen Worten werden bei dieser Anordnung die Submodule bestmöglich ausgenutzt.

Bei einer weiteren vorteilhaften Ausgestaltung der Erfindung sind die Gleichspannungen der Stellerarme identisch, wobei die Wechselspannung des ersten Stellerarms identisch ist mit der Wechselspannung des vierten Stellerarms, wobei die Wechselspannung des zweiten Stellerarms identisch ist mit der Wechselspannung des dritten Stellerarms ist. Durch diesen Betrieb stellen sich vollkommen symmetrische Spannungsverhältnisse und damit auch Stromverhältnisse am modularen Bremssteller ein. Damit einher geht auch eine vollständig gleichmäßige und geringe Belastung der einzelnen Komponenten des modularen Bremsstellers. Insbesondere die Submodule werden elektrische und thermisch gleich belastet. Dadurch ist der modulare Bremssteller besonders Leistungsfähigkeit bei einer hohen Lebensdauer seiner Komponenten.

Bei einer weiteren vorteilhaften Ausgestaltung der Erfindung ist die Wechselspannung sinusförmig ausgebildet und umfasst einen Anteil mit einer Grundfrequenz und einen weiteren Anteil mit dem Dreifachen der Grundfrequenz, wobei die Amplitude der dreifachen Grundfrequenz einem Sechstel der Amplitude der Grundfrequenz entspricht. Da der Verlauf der Wechselspannung frei wählbar ist, hat es sich als vorteilhaft erwiesen, eine Sinusmodulation zu verwenden. Bei dieser Modulation überlagert sich ein grundfrequenter Anteil mit der dritten Harmonischen. Dabei hat die dritte Harmonische 1/6 der Amplitude des Grundschwingungsanteils. Dabei sind diese beiden Anteile beispielsweise derart zueinander ausgerichtet, dass im Maximum der Grundschwingung die dritte Harmonische ihr Minimum annimmt. Damit lässt sich bei beschränkter Amplitude des Spannungsverlaufs der Sinusmodulation ein hoher Effektivwert erreichen. Fällt dieser hohe Effektivwert der Spannung über den Widerstand ab, so bildet sich ein hoher Strom aus. Dies führt über die ohmschen Verluste im Bremswiderstand zu einer hohen Leistungsfähigkeit des modularen Stromrichters bei einer geringen Anzahl von Submodulen.

Im Folgenden wird die Erfindung anhand der in den Figuren dargestellten Ausführungsbeispiele näher beschreiben und erläutert. Es zeigen:
- FIG 1: ein Schalbild des vorgeschlagenen modularen Bremsstellers,
- FIG 2: das Funktionsprinzip des vorgeschlagenen modularen Bremsstellers,
- Figuren 3 bis 5: Ausführungsbeispiele von geeigneten Submodulen und
- FIG 6: ein Antriebssystem mit dem vorgeschlagenen modularen Bremssteller.

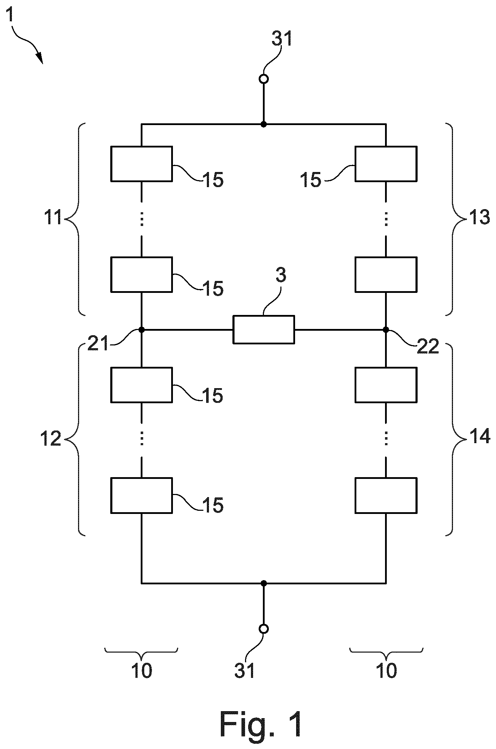

Die FIG 1 zeigt einen modularen Bremssteller 1. Dieser modulare Bremssteller 1 weist zwischen Anschlüssen 31 zwei Phasen 10 auf, wobei die Phasen 10 jeweils zwei Stellerarme 11,12,13,14 umfassen. Der Verbindungspunkt zwischen den beiden Stellerarmen 11,12,13,14 einer Phase 10 bildet jeweils einen Knoten 21,22. Zwischen den beiden Knoten ist elektrisch der Bremswiderstand 3 angeordnet. Die Stellerarme 11,12,13,14 weisen jeweils mindestens ein Submodul 15 auf. Durch eine Reihenschaltung von Submodulen 15 kann der modulare Bremssteller hinsichtlich Leistungsfähigkeit und/oder Spannungsfestigkeit an die Anforderungen, insbesondere an Anforderungen, die durch das Antriebssystem 4 vorgegeben werden, angepasst werden.

Die Stellerarme 11,12,13,14 weisen darüber hinaus eine nicht dargestellte, parasitäre Induktivität auf. Da diese das Regelverhalten verbessert, kann auch zusätzlich ein induktives Bauteil in den Phasen angeordnet werden. Damit kann insbesondere das Verhalten des Gleichstroms zwischen den Anschlüssen 31 verbessert werden.

Zur Unterscheidung der Stellerarme 11,12,13,14 werden diese als erster Stellerarm 11, zweiter Stellerarm 12, dritter Stellerarm 13 und vierter Stellerarm 14 bezeichnet. Anhand dieser Bezeichnungen soll im Folgenden die Funktionsweise des modularen Bremsstellers näher erläutert werden.

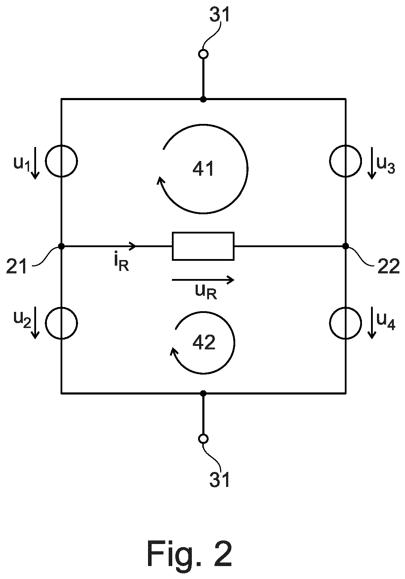

Dazu zeigt FIG 2 das Funktionsprinzip des modularen Bremsstellers 1. Dabei wirken die Stellerarme 11,12,13,14 als Spannungsquelle. Die Spannungsquellen sind dazu vorgesehen, einen Gleichstrom zwischen den Anschlüssen 31 und jeweils einen Wechselstrom in den Maschen 41,42 zu erzeugen. Dazu erzeugen die Stellerarme 11,12,13,14 eine Gleichspannung. Mit einem nicht dargestellten Spannungsabfall über den parasitären Induktivitäten kann damit ein Gleichstrom zwischen den Anschlüssen 31 und damit eine Energieaufnahme über die elektrische Leistung P_{BS} des modularen Bremsstellers 1 gesteuert oder geregelt werden. Die Aufteilung der Gleichspannung auf die beiden Stellerarme 11,12 bzw. 13,14 einer Phase 10 kann beliebig erfolgen. Es hat sich jedoch als vorteilhaft erwiesen, wenn die Spannungsaufteilung in beiden Phasen gleich erfolgt. In diesem Fall fließt kein Gleichstrom über den Bremswiderstand 3. Dies vereinfacht die Regelung des modularen Bremsstellers 1, da es keine Verkopplung zwischen Gleichstrom und Wechselstrom im Bremswiderstand 3 gibt. Um dies zu erreichen, wird vorzugsweise die Gleichspannung im ersten und dritten Stellerarm 11,13 sowie im zweiten und vierten Stellerarm 12,14 gleich gewählt. Aus Symmetriegründen hat es sich weiterhin als vorteilhaft erwiesen, die Aufteilung der Gleichspannung innerhalb der Phase auch zu gleichen Teilen vorzunehmen. Damit erzeugen alle Stellerarme 11,12,13,14 die gleiche Gleichspannung. Die Energieaufnahme des modularen Bremsstellers 1 erfolgt dann auch zu gleichen Anteilen über beide Phasen 10.

Um einen stabilen Betrieb zu ermöglichen, wird die vom modularen Bremssteller 1 aufgenommene vollständig mittels des Bremswiderstands in Wärme umgewandelt. Dazu werden in den Maschen 41,42 jeweils Wechselströme eingeprägt. Dies geschieht mit einer Wechselspannung, die von den Stellerarmen erzeugt wird. Damit diese Wechselspannung keinen Einfluss auf den Strom zwischen den Anschlüssen 31 des modularen Bremsstellers hat, ist die Wechselspannung des ersten Stellerarms 11 gegenphasig zur Wechselspannung des zweiten Stellerarms 12. Genauso ist die Wechselspannung des dritten Stellerarms 13 gegenphasig zur Wechselspannung des vierten Stellerarms 14. Somit tritt zwischen den Anschlüssen keine Wechselspannung auf, die einen Wechselstrom zwischen den Anschlüssen hervorrufen könnte. Damit werden Störungen des modularen Bremsstellers 1 auf den Zwischenkreis aufgrund von Wechselströmen vermieden. Mit anderen Worten verhält sich der modulare Bremssteller bezüglich Oberschwingungen störungsfrei am Zwischenkreis eines Antriebssystems 4.

Gegenphasig bedeutet, dass sich die betreffenden Wechselspannungen um das Vorzeichen unterscheiden.

Die von den Wechselspannungen der Stellermodule erzeugten Ströme in den Maschen 41,42 bilden den Wechselstrom i_{R} durch den Bremswiderstand 3. Die Aufteilung der Wechselspannung auf die Stellerarme einer Masche 41,42 kann dabei beliebig erfolgen. Zumindest bei hoher Leistung, insbesondere bei einer Leistung von mindestens 90% der Nennleistung des modularen Bremsstellers hat es sich als vorteilhaft erwiesen, wenn sich die durch die Stellerarme 11,13 bzw. 12, 14 einer Phasen 10 erzeugten Amplituden der Wechselspannungen innerhalb der Maschen 41,42 addieren. Dazu sind die Wechselspannungen des ersten und des dritten Stellerarms 11,13 sowie die Wechselspannungen des zweiten und des vierten Stellerarms 12,14 gegenphasig zueinander ausgerichtet.

Dabei kann der Zeitverlauf der Wechselspannung frei gewählt werden. Insbesondere ein sinusförmiger, rechtförmiger oder trapezförmiger Verlauf haben sich als vorteilhaft erwiesen, da diese einfach durch die in einer Reihenschaltung angeordneten Submodule 15 erzeugbar sind. Darüber hat sich die Verwendung eines Sinusmodulation als vorteilhaft erwiesen, da mit dieser Sinusmodulation hohe Effektivwerte bei beschränkter Schwankungsbreite erzeugt werden können. Bei der Sinusmodulation wird eine Grundschwingung mit einer Oberschwingung, beispielsweise der 3. Harmonischen, überlagert.

Prinzipiell sind alle bekannten Submodule 15 für den beschriebenen modularen Bremssteller 1 geeignet. Die folgenden Figuren zeigen beispielhaft Ausführungsbeispiele von Submodulen 15, die für den modularen Bremssteller 1 zur Anwendung kommen können.

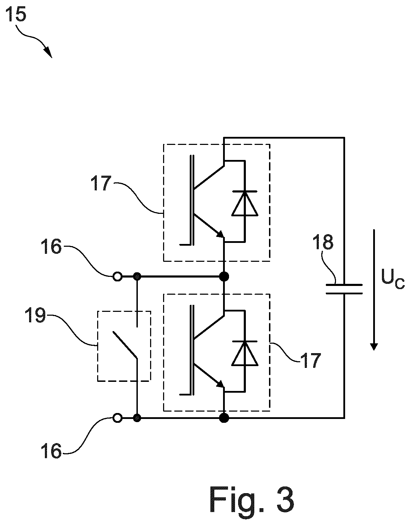

Die FIG 3 zeigt ein sogenanntes Halbbrückenmodul. Dieses Submodul 15 weist neben dem Submodulkondensator 18 Halbleiterschalter 17 auf. Mittels der Halbleiterschalter lassen sich in diesem Ausführungsbeispiel zwei Spannungszustände an Submodulanschlüssen 16 erzeugen. Zum einen kann die Spannung des Submodulkondensators 18 oder die Spannung null an den Submodulanschlüssen 16 anliegen. Optional kann das Submodul 15 einen Kurzschließer 19 aufweisen. Dieser kann bei einem Fehler im Submodul 15 die Submodulanschlüsse 16 kurzschließen und damit das betreffende Submodul 15 überbrücken. Damit kann auch bei einem Fehler eines Submoduls 15 der modulare Bremsstellers 1 weiterhin betrieben werden. Der Kurzschließer 19 kann beispielsweise als mechanischer Schalter, als Halbleiter oder pyrotechnischer Schalter ausgebildet sein. Auch bei den folgenden Ausführungsformen der Submodule 15 kann ein derartiger Kurzschließer 19 an den Submodulklemmen 16 zum Einsatz kommen.

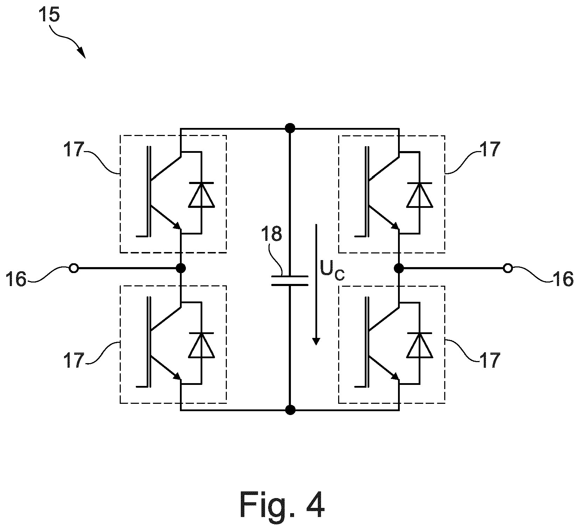

Die FIG 4 zeigt ein sogenanntes Vollbrückenmodul. Durch die vier Halbleiterschalter 17 lassen sich die Spannungszustände positive Spannung des Submodulkondensators 18, negative Spannung des Submodulkondensators oder die Spannung null an den Submodulanschlüssen 16 des modularen Bremsstellers 1 erzeugen. Zur Vermeidung von Wiederholungen wird auf die Beschreibung zur FIG 3 sowie auf die dort eingeführten Bezugszeichen verwiesen.

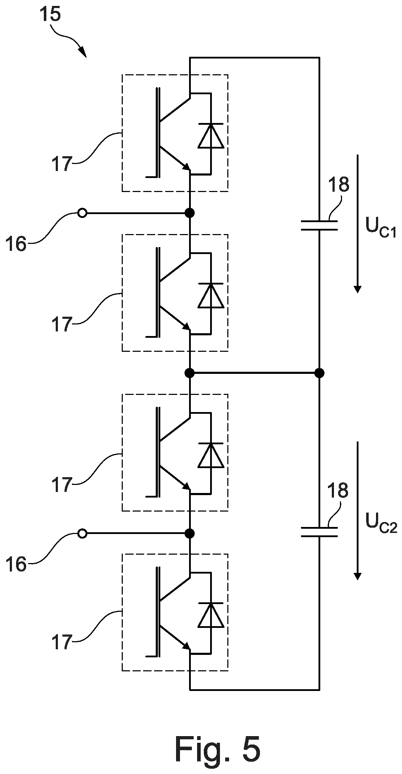

Die FIG 5 zeigt ein sogenanntes Doppelhalbbrückenmodul. Durch die vier Halbleiterschalter 17 lassen sich die Spannungszustände Spannung des ersten Submodulkondensators 18, Spannung des zweiten Submodulkondensators 18, Summe der Spannungen beider Submodulkondensatoren oder die Spannung null an den Submodulanschlüssen 16 des modularen Bremsstellers 1 erzeugen. Zur Vermeidung von Wiederholungen wird auf die Beschreibung zu den Figuren 3 und 4 sowie auf die dort eingeführten Bezugszeichen verwiesen.

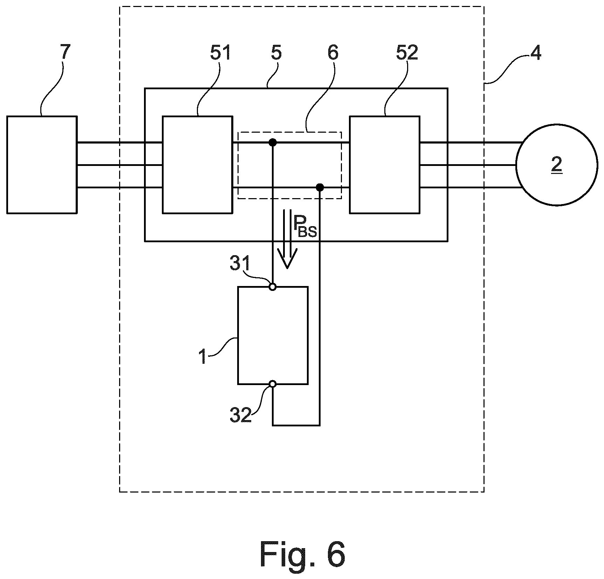

Die FIG 6 zeigt an Antriebssystem 4. Dabei ist eine elektrische Maschine 2 über das Antriebssystem 4 mit einem Energieversorgungsnetz 7 verbunden. Ein Stromrichter 5 wandelt dabei Energie des Energieversorgungsnetzes mittels eines Gleichrichters 51 in Gleichspannung und anschließend durch den Wechselrichter 52 in eine Wechselspannung zur Speisung der elektrischen Maschine 2. Die Verbindung zwischen Gleichrichter 51 und Wechselrichter 52 bildet den Zwischenkreis. Je nach Ausgestaltung von Energieversorgungsnetz 7 und/oder elektrischer Maschine kann auf einen Gleichrichter 51 oder Wechselrichter 52 verzichtet werden. Der modulare Bremssteller 1 ist mit seinen Anschlüssen 31 mit dem Zwischenkreis 6 des Stromrichters 5 elektrisch verbunden. Dabei kann der modulare Bremssteller 1 dem Zwischenkreis 6 die Leistung P_{BS} entnehmen und in Wärme umwandeln. Die Notwendigkeit für diese Energieumwandlung kann sich dadurch ergeben, dass die elektrische Maschine Energie in den Stromrichter 5 einspeist und dabei das Energieversorgungsnetz nicht aufnahmefähig und/oder der Gleichrichter nicht rückspeisefähig ist. In diesem Fall nimmt der modulare Bremssteller 1 die von der elektrischen Maschine 1 eingespeiste Leistung verschleißfrei auf und wandelt diese in Wärme um.

Zusammenfassend betrifft die Erfindung einen modularen Bremssteller 1 mit zwei Anschlüssen 31, wobei der modulare Bremssteller 1 vier Stellerarme 11,12,13,14 aufweist, wobei ein erster Stellerarm 11 und ein zweiter Stellerarm 12 der vier Stellerarme 11,12,13,14 elektrisch in Reihe zwischen den zwei Anschlüssen 31 angeordnet sind, wobei ein Verbindungspunkt zwischen dem ersten Stellerarm 11 und dem zweiten Stellerarm 12 einen ersten Knoten 21 bildet, wobei ein dritter Stellerarm 13 und ein vierter Stellerarm 14 der vier Stellerarme 11,12,13,14 in Reihe zwischen den zwei Anschlüssen 31 angeordnet sind, wobei ein weiterer Verbindungspunkt zwischen dem dritten Stellerarm 13 und dem vierten Stellerarm 14 einen zweiten Knoten 22 bildet, wobei zwischen dem ersten Knoten 21 und dem zweiten Knoten 22 ein Bremswiderstand 3 angeordnet ist, wobei die Stellerarme 11,12,13,14 jeweils mindestens ein Submodul aufweisen. Ferner betrifft die Erfindung ein Antriebssystem 4 mit einem Stromrichter 5 und einem derartigen modularen Bremssteller 1, wobei die Anschlüsse 31 des modularen Bremsstellers 1 mit einem Zwischenkreis des Stromrichters 5 elektrisch verbunden sind. Die Erfindung betrifft weiter ein Betriebsverfahren für einen derartigen modularen Bremssteller 1 oder für ein derartiges Antriebssystem, wobei die Stellerarme 11,12,13,14 jeweils eine Gleichspannung und darüber hinaus zumindest ein Teil der Stellerarme 11,12,13,14 eine Wechselspannung erzeugen.

### Bezugszeichenliste

- 1: Modularer Bremssteller
- 2: elektrische Maschine
- 3: Bremswiderstand
- 4: Antriebssystem
- 5: Stromrichter
- 6: Zwischenkreis
- 7: Energieversorgungsnetz
- 10: Phase
- 11: erster Stellerarm
- 12: zweiter Stellerarm
- 13: dritter Stellerarm
- 14: vierter Stellerarm
- 15: Submodul
- 16: Submodulanschlüsse
- 17: Halbleiterschalter
- 18: Submodulkondensator
- 19: Kurzschließer
- 21: erster Knoten
- 22: zweiter Knoten
- 31: Anschluss des modularen Bremsstellers (1)
- 41: erste Masche
- 42: zweite Masche
- 51: Gleichrichter
- 52: Wechselrichter
- P_{BS}: Leistung des modularen Bremsstellers (1)
- uₓ: Spannung des jeweiligen Stellerarms (11,12,13,14)
- U_{D}: Zwischenkreisspannung
- I_{D}: Gleichstrom zwischen den Anschlüssen (31) des modularen Bremsstellers (1)
- i_{R,eff}: Effektivwert des Stroms durch den Bremssteller
- R: Widerstandswert des Bremswiderstands (3)

## Patentansprüche

1. Modularer Bremssteller (1) mit zwei Anschlüssen (31), wobei der modulare Bremssteller (1) vier Stellerarme (11,12,13,14) aufweist, wobei ein erster Stellerarm (11) und ein zweiter Stellerarm (12) der vier Stellerarme (11,12,13,14) elektrisch in Reihe zwischen den zwei Anschlüssen (31) angeordnet sind, wobei ein Verbindungspunkt zwischen dem ersten Stellerarm (11) und dem zweiten Stellerarm (12) einen ersten Knoten (21) bildet, wobei ein dritter Stellerarm (13) und ein vierter Stellerarm (14) der vier Stellerarme (11,12,13,14) in Reihe zwischen den zwei Anschlüssen (31) angeordnet sind, wobei ein weiterer Verbindungspunkt zwischen dem dritten Stellerarm (13) und dem vierten Stellerarm (14) einen zweiten Knoten (22) bildet, wobei zwischen dem ersten Knoten (21) und dem zweiten Knoten (22) ein Bremswiderstand (3) angeordnet ist, wobei die Stellerarme (11,12,13,14) jeweils mindestens ein Submodul (15) mit einem Submodulkondensator (18) aufweisen, wobei das Submodul (15) derart ausgebildet ist, mittels mindestens zweier Halbleiterschalter (17) mindestens zwei unterschiedliche Spannungszustände zwischen den Submodulanschlüssen (16) des Submoduls (15) erzeugen zu können, wobei einer der mindestens zwei Spannungszuständen einer am Submodulkondensator (18) anliegenden Spannung entspricht.

2. Modularer Bremssteller (1) nach Anspruch 1, wobei die Stellerarme (11,12,13,14)jeweils eine Vielzahl von Submodulen (15) aufweisen, wobei die Submodule (15) des jeweiligen Stellerarmes (11,12,13,14) elektrisch in einer Reihenschaltung angeordnet sind.

3. Antriebssystem (4) mit einem Stromrichter (5) und einem modularen Bremssteller (1) nach einem der Ansprüche 1 oder 2, wobei die Anschlüsse (31) des modularen Bremsstellers (1) mit einem Zwischenkreis des Stromrichters (5) elektrisch verbunden sind.

4. Betriebsverfahren für einen modularen Bremssteller (1) nach einem der Ansprüche 1 oder 2 oder für ein Antriebssystem nach Anspruch 3, wobei die Stellerarme (11,12,13,14) jeweils eine Gleichspannung erzeugen, die derart bemessen ist, dass an den Anschlüssen (31) des modularen Bremsstellers eine vorgebbare elektrische Leistung aufgenommen wird, wobei zumindest ein Teil der Stellerarme (11,12,13,14) ferner jeweils eine Wechselspannung erzeugen, die derart bemessen ist, dass eine vorgebbare thermische Leistung im Bremswiderstand (3) in Wärme umgesetzt wird, wobei die vorgebbare thermische Leistung der vorgebbaren elektrischen Leistung entspricht.

5. Betriebsverfahren nach Anspruch 4, wobei die Gleichspannung des ersten Stellerarms (11) identisch ist mit der Gleichspannung des dritten Stellerarms (13), wobei die Gleichspannung des zweiten Stellerarms (12) identisch ist mit der Gleichspannung des vierten Stellerarms (14), wobei die Wechselspannung des ersten Stellerarms (11) gegenphasig zur Wechselspannung des zweiten Stellerarms (12) ist, wobei die Wechselspannung des dritten Stellerarms (13) gegenphasig zur Wechselspannung des vierten Stellerarms (14) ist.

6. Betriebsverfahren nach einem der Ansprüche 4 oder 5, wobei die Gleichspannungen der Stellerarme (11,12,13,14) identisch sind, wobei die Wechselspannung des ersten Stellerarms (11) identisch ist mit der Wechselspannung des vierten Stellerarms (14), wobei die Wechselspannung des zweiten Stellerarms (12) identisch ist mit der Wechselspannung des dritten Stellerarms (13) ist.

7. Betriebsverfahren nach einem der Ansprüche 4 bis 6, wobei die Wechselspannung sinusförmig ausgebildet ist und einen Anteil mit einer Grundfrequenz und einen weiteren Anteil mit dem Dreifachen der Grundfrequenz umfasst, wobei die Amplitude der dreifachen Grundfrequenz einem Sechstel 1/6 der Amplitude der Grundfrequenz entspricht.
